# EUROPEAN PATENT APPLICATION

(11) **EP 1 610 310 A2**
(43) Date of publication of application: **28.12.2005**
(21) Application number: 05004363.7
(22) Date of filing: 28.02.2005
(51) Int. Cl.: G11B 7/085, G11B 21/08, G11B 19/20

(54) **Optical disk drive unit**

(30) Priority: 25.06.2004 JP 2004188016
(71) Applicant: Mitsumi Electric Co., Ltd., Tama-Shi, Tokyo (JP)
(72) Inventor: Yoshino, Shigeru, Atsugi-shi Kanagawa (JP); Sato, Takashi, Atsugi-shi Kanagawa (JP)
(74) Representative: Grünecker, Kinkeldey, Stockmair & Schwanhäusser Anwaltssozietät

(57) **Abstract**

A base plate (11) is supported on the base frame by way of a plurality of supporting points. A turntable (12), on which an optical disk is mounted, is disposed on a first face (111) of the base plate. An optical pickup (13) is adapted at least one of to reproduce and to record information on the optical disk. A guide mechanism (14) is operable to move the optical pickup in a radial direction of the optical disk. A first motor (15) is operable to rotate the turntable. A second motor (16) is operable to drive the guide mechanism. A weight member (18A) extends so as to bridge opposed side end portions of the second face (112) of the base plate.

## Description

### BACKGROUND OF THE INVENTION

The present invention relates to an optical disk drive unit for reproducing, or recording/reproducing information on an optical disk.

The optical disk drive unit is a device for reproducing, or recording/reproducing information on an optical disk such as a DVD (digital versatile disc). The DVD includes a DVD-Video for digital video, a DVD-Audio for music, a DVD-ROM for an exterior storage device for computers, a write-once DVD-R (Recordable), a rewritable DVD-RAM, and so on.

The optical disk drive unit of this type has a main body of the device and a disk tray for conveying the optical disk to this main body, as disclosed, for example, in Japanese Patent Publication No. 2003-217210A. The main body of the device includes a chassis formed of hard resin or the like, and a driving mechanism mounted on this chassis. The chassis has a loading mechanism for loading or unloading the disk tray and also for moving the driving mechanism up and down.

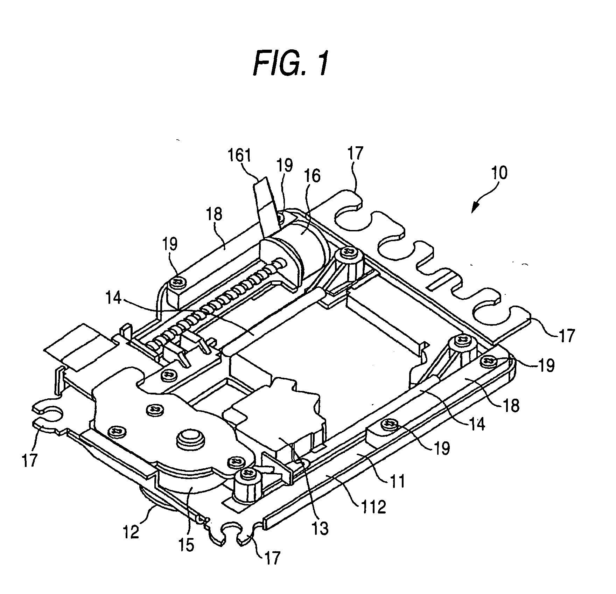

Fig. 1 shows one example of a related-art optical disk drive unit. A disk drive unit 10 comprises a base plate 11 which is supported on a base frame (not shown) by way of four insulators (not shown) formed of elastic material. The base plate 11 in Fig. 1 has a flat shape.

The base plate 11 is provided with: a turntable 12 for clamping an optical disk (not shown) in cooperation with a disk clamper (not shown) thereby to rotate the optical disk; an optical pickup 13 for reproducing, or recording/reproducing information on the optical disk; a guide mechanism 14 which guides the optical pickup 13 in a radial direction of the optical disk; a spindle motor 15 for rotating the turntable 12; and a thread motor 16 for driving the optical pickup 13 by way of a gear mechanism (not shown).

The base plate 11 has four parts 17 for mounting the above described four insulators respectively at its four corners. Accordingly, the disk drive unit 10 is supported at the four points.

In the driving mechanism of the type as described above, the spindle motor 15 rotates at high speed rotation number of 6000 rpm or more, thereby generating vibrations in the disk drive unit 10.

In order to reduce the vibrations, the related-art disk drive unit 10 has a plurality of weight members 18 which are fixed to both side edges of a back face of the base plate 11 with screws 19. In this case, five sheets of the weight members 18 each having the same weight are employed to be respectively mounted on both the side edges, and the total weight of the weight members 18 is 40 to 50g. The total weight of the disk drive unit 10 inclusive of the weight members 18 is 320g. A thickness of a sheet of the weight member 18 is 1.2mm, which is equal to a thickness of the base plate 11.

By mounting the weight members 18 in this manner, adjustment will be made so that a center of the four supporting points is matched with the center of gravity of the disk drive unit 10.

In the related-art disk drive unit 10 having the above described structure, it is impossible to increase the weight of the weight members 18 without limit, because of a limited space. Besides, the plural weight members 18 are mounted only on both the side edges of the back face of the base plate 11, the weight members 18 will not serve to enhance strength of the base plate 11 against a force for twisting or bending the base plate 11.

### SUMMARY OF THE INVENTION

It is therefore an object of the invention is to provide an optical disk drive unit in which strength of a base plate against torsion or bending is enhanced.

In order to achieve the above object, according to the invention, there is provided an optical disk drive unit, comprising:
a base frame;
a base plate, supported on the base plate by way of a plurality of supporting points;
a turntable, on which an optical disk is mounted, the turntable disposed on a first face of the base plate;
an optical pickup, adapted at least one of to reproduce and to record information on the optical disk;
a guide mechanism, operable to move the optical pickup in a radial direction of the optical disk;
a first motor, operable to rotate the turntable;
a second motor, operable to drive the guide mechanism; and
a weight member, extending so as to bridge opposed side end portions of the second face of the base plate.

With this configuration, since a box-shaped structure is constituted by the base plate and the weight member, strength of the base plate against torsion or bending can be enhanced.

Preferably, the weight member is arranged such that a center of the supporting points is matched with a center of gravity of the optical disk drive unit.

Preferably, the weight member is a case-shaped member and the base plate is a flat member.

Here, it is preferable that the weight member comprises: a first section, extending in a first direction parallel with the base plate, and having a width narrower than a width of the base plate; a pair of second sections, extending in a second direction orthogonal to the first direction from opposed side edges of the first section; and a pair of third sections, each of which extends in the first direction from an end of each of the second sections to be fixed on the base plate.

Here, it is further preferable that one of the opposed side edges of the first section has a width wider than a width of the other one.

Alternatively, the weight member may be a flat member and the base plate may be a case-shaped member.

According to the invention, there is provided an apparatus for at least one of reproducing and recording information on an optical disk comprising the above optical disk drive unit.

### BRIEF DESCRIPTION OF THE DRAWINGS

The above objects and advantages of the present invention will become more apparent by describing in detail preferred exemplary embodiments thereof with reference to the accompanying drawings, wherein:
Fig. 1 is a perspective view of a related-art optical disk drive unit;
Fig. 2 is a perspective bottom view of an optical disk drive unit according to a first embodiment of the invention;
Fig. 3 is a perspective top view of the optical disk drive unit of Fig. 2;
Fig. 4 is a perspective view of a disassembled state of the optical disk drive unit of Fig. 2;
Fig. 5A is a left side view of the optical disk drive unit of Fig. 2;
Fig. 5B is a rear side view of the optical disk drive unit of Fig. 2;
Fig. 5C is a top plan view of the optical disk drive unit of Fig. 2;
Fig. 5D is a front side view of the optical disk drive unit of Fig. 2;
Fig. 5E is a right side view of the optical disk drive unit of Fig. 2;
Fig. 5F is a bottom plan view of the optical disk drive unit of Fig. 2;
Fig. 6 is a perspective bottom view of a weight member in the optical disk drive unit of Fig. 2;
Fig. 7 is a perspective top view of the weight member of Fig. 6;
Fig. 8A is a left side view of the weight member of Fig. 6;
Fig. 8B is a rear side view of the weight member of Fig. 6;
Fig. 8C is a bottom plan view of the weight member of Fig. 6;
Fig. 8D is a front side view of the weight member of Fig. 6;
Fig. 8E is a right side view of the weight member of Fig. 6;
Fig. 9 is a bottom plan view of an optical disk drive unit according to a second embodiment of the invention;
Fig. 10A is a left side view of a weight member in the optical disk drive unit of Fig. 9;
Fig. 10B is a rear side view of the weight member of Fig. 10A;
Fig. 10C is a bottom plan view of the weight member of Fig. 10A;
Fig. 10D is a front side view of the weight member of Fig. 10A; and
Fig. 10E is a right side view of the weight member of Fig. 10A.

### DETAILED DESCRIPTION OF THE INVENTION

Embodiments of the invention will be described below in detail with respect to the accompanying drawings.

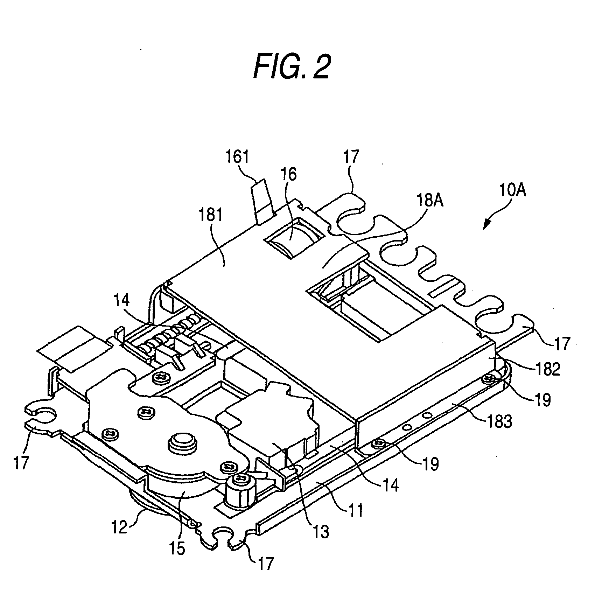

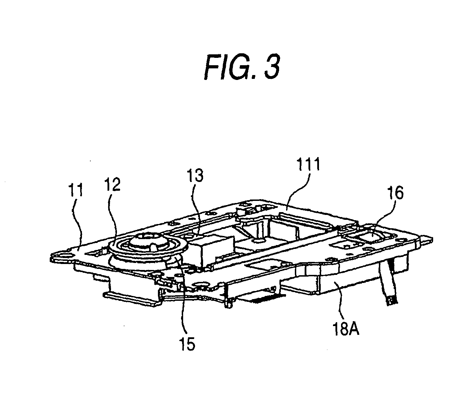

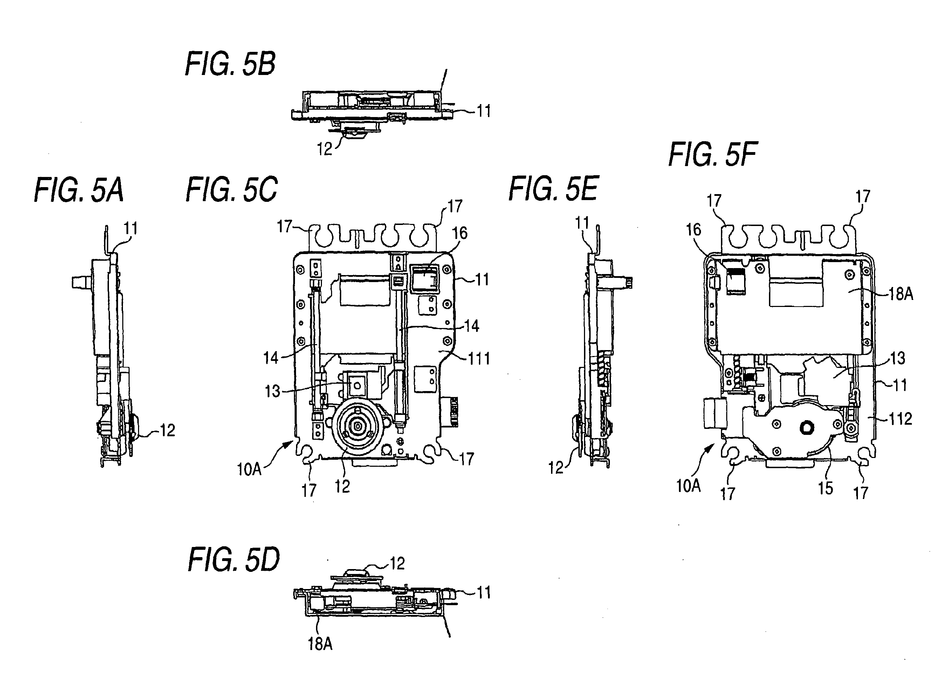

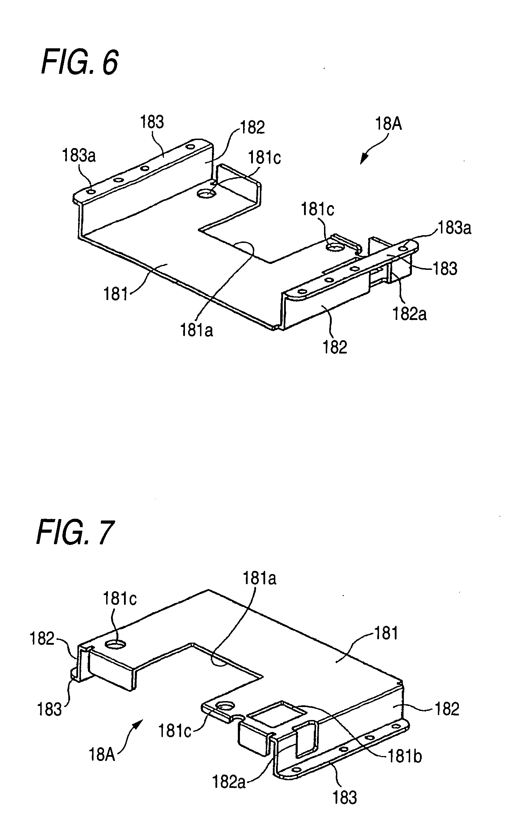

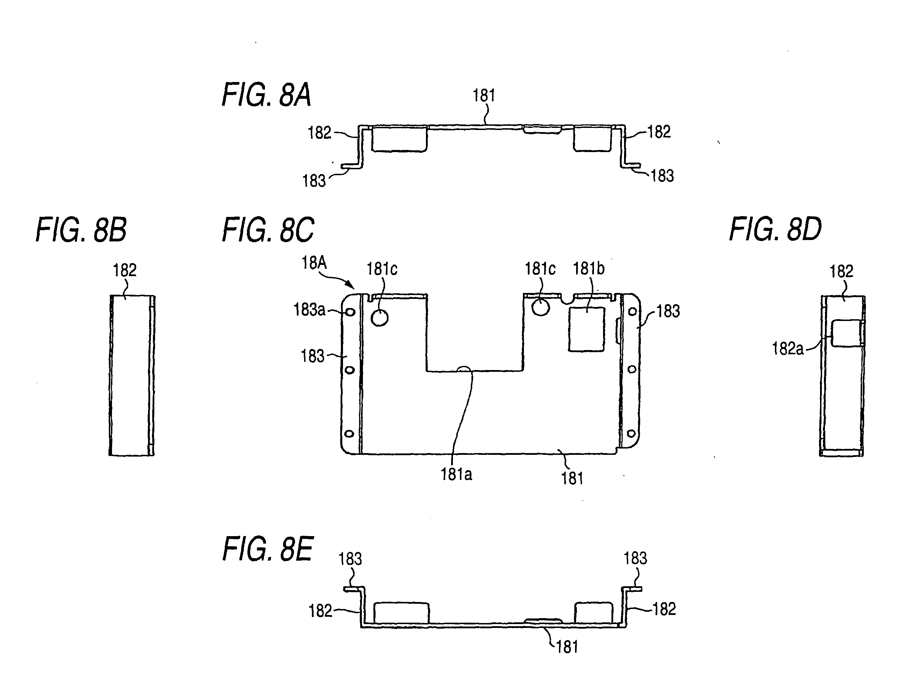

Figs. 2 through 8E show an optical drive unit 10A according to a first embodiment of the invention. The disk drive unit 10A has substantially the same structure and operation as the disk drive unit 10 shown in Fig. 1, except that the weight member 18A has a different shape (structure), as described below. Components similar to those in Fig. 1 will be designated by the same reference numerals and repetitive explanations for those will be omitted.

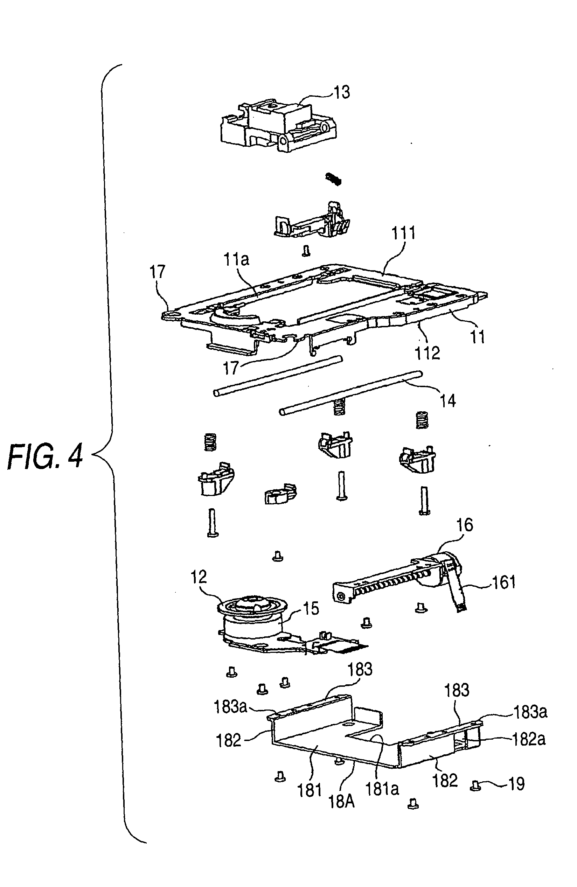

The disk drive unit 10A comprises a base plate 11 which is supported on a base frame (not shown) at four points by way of four insulators (not shown) formed of elastic material. As shown in Fig. 4, the base plate 11 has a flat shape. The base plate 11 has a front face 111 and a back face 112, and an opening 11a in a substantially rectangular shape is formed in a center part of the base plate 11.

A turntable 12 is arranged on the front face 111 of the base plate 11. This turntable 12 is adapted to rotate the optical disk by clamping it in cooperation with a disk clamper (not shown). An optical pickup 13 is arranged in the opening 11a of the base plate 11. The optical pickup 13 is for the purpose of reproducing, or recording/reproducing information on the optical disk. A guide mechanism 14 is arranged in the opening 11a of the base plate 11. The guide mechanism 14 is for the purpose of guiding the optical pickup 13 in a radial direction of the optical disk. A spindle motor 15 is arranged on the back face 112 of the base plate 11. The spindle motor 15 is adapted to rotate the turntable 12. A thread motor 16 is arranged on the back face 112 of the base plate 11. The thread motor 16 is adapted to drive the optical pickup 13.

The weight member 18A is arranged on the back face 112 of the base plate 111. The weight member 18A is extended between both side edges of the base plate 11, and fixed to both the side edges of the base plate 11.

As shown in Fig. 2, the weight member 18A is arranged on the back face 112 of the base plate 11 at an opposite side to a position where the spindle motor 15 is mounted.

The weight member 18 has a main face 181 which extends in parallel with the front face 111 of the base plate 11 and has a somewhat shorter width than a width of the base plate 11, a pair of side faces 182 which extend perpendicularly from both side ends of the main face 181, and a pair of fitting parts 183 which extend perpendicularly from a pair of these side faces 182 to be fitted to the base plate 11. In this embodiment, a thickness of the weight member 18A is the same as a thickness of the base plate 11. Anyway, the weight member 18A has a case-shaped outlook and bridges both the side edges of the base plate 11.

The main face 181 is provided with an opening 181a in a rectangular shape through which a flexible printed circuit (FPC) (not shown) drawn out from the optical pickup 13 is passed, an opening 181b in a rectangular shape through which a portion of the thread motor 16 is projected, and a pair of round holes 181c through which portions of fixing members for fixing the guide mechanism 14 to the base plate 11 are projected. One of the side faces 182 is provided with an opening 182a in a rectangular shape through which a flexible printed circuit (FPC) 161 for supplying electric power to the thread motor 16 is passed.

Each of a pair of the fitting parts 183 is provided with four holes 183a. Two of the holes positioned near both ends are holes for passing the screws 19, and the two holes positioned in a center part are holes for positioning. On the other hand, the base plate 11 is provided with positioning projections at positions respectively corresponding to these two positioning holes.

The weight member 18A having the structure as described above is attached to the base plate 11 and fixed with the four screws 19 in a pair of the fitting parts 183.

By mounting this weight member 18A on the back face 112 of the base plate 11, adjustment will be made so that a center of the four supporting points is substantially matched with the center of gravity of the disk drive unit 10A.

Because the weight member 18A has a case-shaped structure, the base plate 11 thus has a box-shaped structure. Accordingly, the strength of the base plate 11 against torsion or bending can be enhanced.

In this embodiment, the weight member 18A is arranged at a lower position than the optical pickup 13. Accordingly, it is possible to select a position of the weight member 18A without restriction due to the positions of other components. In this manner, freeness in design, for example, in making fine adjustments of the center of gravity of the disk drive unit 10A will be enhanced, and at the same time, the weight member 18A can be increased in weight.

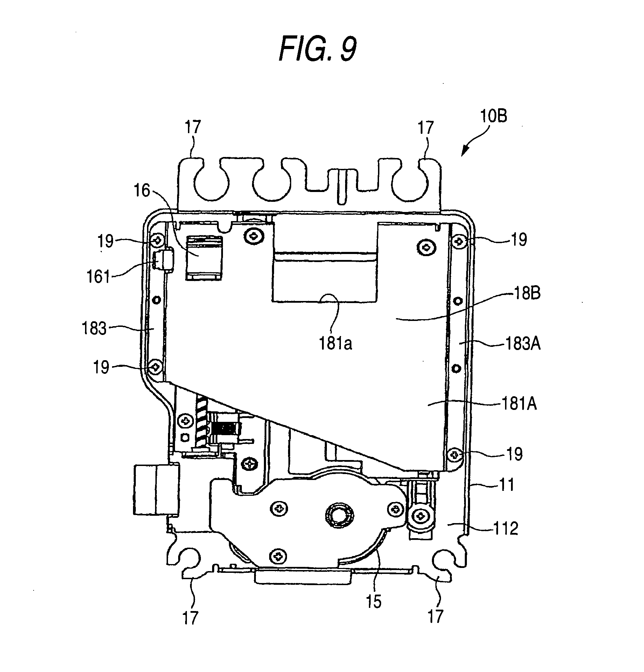

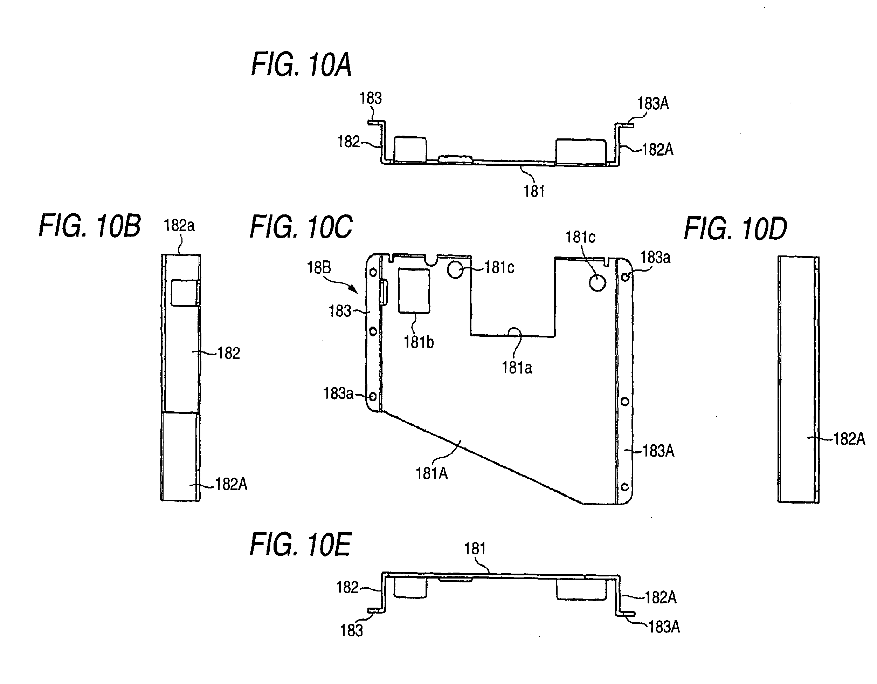

Figs. 9 through 10E shows an optical disk drive unit 10B according to a second embodiment of the invention. The disk drive unit 10B has substantially the same structure and operation as the disk drive unit 10A of the first embodiment, except that the weight member 18B has a different shape (structure), as described below. Components similar to those in the first embodiment will be designated by the same reference numerals and repetitive explanations for those will be omitted.

The weight member 18B has such a shape that one side edge of the main face 181A is extended longer toward the spindle motor 15 than the other side edge. In this connection, one of the side faces 182A is made longer than the other side face 182, and one of the fitting parts 183A is also made longer than the other fitting part 183.

The one fitting part 183A is provided with four holes 183a. Two of the holes positioned near both ends are holes for passing the screws 19, and the two holes positioned in a center part are holes for positioning. The other fitting part 183 is provided with three holes 183b. Two of the holes positioned near both ends are holes for passing the screws 19, and one hole positioned in a center part is a hole for positioning. On the other hand, the base plate 11 is provided with positioning projections at positions corresponding to these three positioning holes.

The weight member 18B having the above described structure can be made heavier in weight member than the weight member 18A in the first embodiment.

By mounting this weight member 18B on the base plate 11, adjustment will be made so that a center of the four supporting points is substantially matched with the center of gravity of the disk drive unit 10B.

Because the weight member 18A has a case-shaped structure, the base plate 11 thus has a box-shaped structure. Accordingly, the strength of the base plate 11 against torsion or bending can be enhanced.

In this embodiment, the weight member 18B is arranged at a lower position than the optical pickup 13. Accordingly, it is possible to select a position of the weight member 18B without restriction due to the positions of other components. In this manner, freeness in design, for example, in making fine adjustments of the center of gravity of the disk drive unit 10B will be enhanced, and the center of gravity of the driving mechanism can be moved to such a position that vibrations may be reduced. At the same time, an increase in weight of the weight member 18B can be achieved.

Although the invention has been heretofore described referring to the preferred embodiments thereof, it is apparent that those skilled in the art can make various modifications within a scope not deviating from the concept of the invention.

For example, in the above embodiments, the box-shaped structure of the disk drive unit is obtained by attaching the case-shaped weighting member to the flat base plate. However, there may be configured such that a flat weight member is attached to a case-shaped base plate to obtain the box-shaped structure. It is essential that the weight member bridges the side edges of the base plate.

## Claims

1. An optical disk drive unit, comprising:
a base frame;
a base plate, supported on the base plate by way of a plurality of supporting points;
a turntable, on which an optical disk is mounted, the turntable disposed on a first face of the base plate;
an optical pickup, adapted at least one of to reproduce and to record information on the optical disk;
a guide mechanism, operable to move the optical pickup in a radial direction of the optical disk;
a first motor, operable to rotate the turntable;
a second motor, operable to drive the guide mechanism; and
a weight member, extending so as to bridge opposed side end portions of the second face of the base plate.

2. The optical disk drive unit as set forth in claim 1, wherein the weight member is arranged such that a center of the supporting points is matched with a center of gravity of the optical disk drive unit.

3. The optical disk drive unit as set forth in claim 1, wherein the weight member is a case-shaped member and the base plate is a flat member.

4. The optical disk drive unit as set forth in claim 3, wherein the weight member comprises:
a first section, extending in a first direction parallel with the base plate, and having a width narrower than a width of the base plate;
a pair of second sections, extending in a second direction orthogonal to the first direction from opposed side edges of the first section; and
a pair of third sections, each of which extends in the first direction from an end of each of the second sections to be fixed on the base plate.

5. The optical disk drive unit as set forth in claim 4, wherein one of the opposed side edges of the first section has a width wider than a width of the other one.

6. The optical disk drive unit as set forth in claim 1, wherein the weight member is a flat member and the base plate is a case-shaped member.

7. An apparatus for at least one of reproducing and recording information on an optical disk comprising the optical disk drive unit as set forth in claim 1.
